# EUROPÄISCHE PATENTSCHRIFT

(11) **EP 4 100 375 B1**
(45) Veröffentlichungstag und Bekanntmachung des Hinweises auf die Patenterteilung: **03.01.2024**
(21) Anmeldenummer: 21701056.0
(22) Anmeldetag: 12.01.2021
(51) Int. Cl.: C03C 17/34

(54) **FAHRZEUGSCHEIBE MIT VERMINDERTER EMISSIVITÄT UND LICHTREFLEXION**
VEHICLE WINDOW WITH REDUCED EMISSIVITY AND LIGHT REFLECTION
VITRE DE VÉHICULE À ÉMISSIVITÉ RÉDUITE ET À RÉFLEXION LUMINEUSE

(30) Priorität: 06.02.2020 EP 20155756
(43) Veröffentlichungstag der Anmeldung: 14.12.2022
(73) Patentinhaber: Saint-Gobain Glass France, 92400 Courbevoie (FR)
(72) Erfinder: HAGEN, Jan, 53123 Bonn (DE); GIRARD, Pauline, 60200 COMPIEGNE (FR)
(74) Vertreter: Gebauer, Dieter Edmund
(86) Internationale Anmeldenummer: PCT/EP2021/050463
(87) Internationale Veröffentlichungsnummer: WO 2021/156023

(56) Entgegenhaltungen:
- WO-A1-2018/206236
- US-A1- 2010 101 649

## Beschreibung

Die Erfindung betrifft eine Fahrzeugscheibe mit verminderter Emissivität und Lichtreflexion, sowie deren Herstellung und Verwendung.

Der Innenraum eines Kraftfahrzeugs oder eines Gebäudes kann sich im Sommer bei hohen Umgebungstemperaturen und intensiver direkter Sonneneinstrahlung stark erwärmen. Ist die Außentemperatur dagegen geringer als die Temperatur im Innenraum, was insbesondere im Winter auftritt, so wirkt eine kalte Scheibe als Wärmesenke, die als unangenehm empfunden wird. Auch muss der Innenraum stark beheizt werden, um eine Auskühlung über die Fensterscheiben zu vermeiden.

Um diesem Problem zu begegnen, sind Scheiben mit verminderter Emissivität bekannt. Solche Scheiben weisen auf ihrer innenraumseitigen Oberfläche eine emissivitätsmindernde Beschichtung auf. Solche Beschichtungen sind auch als LowE-Beschichtungen bekannt und weisen reflektierende Eigenschaften gegenüber Wärmestrahlung auf. Bei hohen Außentemperaturen verhindert die Beschichtung, dass die von der erwärmten Scheibe ausgehende Wärmestrahlung in den Innenraum gelangt, der durch die Scheibe von der äußeren Umgebung getrennt wird. Außerdem wird ein Teil der infraroten Sonnenstrahlung reflektiert. Bei geringen Außentemperaturen verringert die Beschichtung den Wärmetransfer vom beheizten Innenraum über die Scheibe in die äußere Umgebung. Insgesamt wird der thermische Komfort durch eine solche Scheibe mit verminderter Emissivität verbessert.

Scheiben mit verminderter Emissivität werden im Fahrzeugbereich eingesetzt, insbesondere als Dachscheiben. Hierfür geeignete emissivitätsmindernde Beschichtungen sind beispielsweise bekannt aus EP2141135A1, WO2011105991A1, WO2013131667A1 und WO2018206236A1.

Die emissivitätsmindernden Beschichtungen können den Nachteil aufweisen, dass sie die Scheibe mit einer gewissen innenraumseitigen Lichtreflexion versehen, insbesondere unter flachen Reflexionswinkeln. Dies kann zu störenden Effekten führen. So können sich beispielsweise die Anzeige des Navigationssystems oder sonstige elektronische Anzeigen (*Displays*) an der Dachscheibe spiegeln, was für Personen auf der Rückbank störend wirken kann.

Es sind verschiedene Antireflexionsbeschichtungen bekannt, durch welche die Lichtreflexion einer Glasscheibe herabgesetzt werden kann. Antireflexionsbeschichtungen können als Schichtenfolge mit alternierenden Schichten unterschiedlichen Brechungsindex ausgebildet sein, wobei die Lichtreflexion durch Interferenzeffekte reduziert wird. Daneben sind poröse Siliziumoxid-Schichten als Antireflexionsschichten bekannt. Diese können durch Ätzen aus der Glasoberfläche gebildet werden. Alternativ können die porösen Siliziumoxidschichten auch durch Sol-Gel-Verfahren hergestellt werden. Eine solche Antireflexionsbeschichtung ist beispielsweise aus WO2008059170A2 oder aus US 2010/101649 A1 bekannt.

Der vorliegenden Erfindung liegt die Aufgabe zugrunde, eine verbesserte Fahrzeugscheibe mit emissivitätsmindernder Beschichtung bereitzustellen, welche eine geringere innenraumseitige Lichtreflexion aufweist. Außerdem soll ein kostengünstiges, industriell anwendbares Verfahren bereitgestellt werden, die Fahrzeugscheibe hochqualitativ und langzeitstabil herzustellen.

Die Aufgabe wird gelöst durch eine Fahrzeugscheibe mit verminderter Emissivität und Lichtreflexion gemäß Anspruch 1. Bevorzugte Ausgestaltungen gehen aus den Unteransprüchen hervor.

Die erfindungsgemäße Fahrzeugscheibe mit verminderter Emissivität und Lichtreflexion umfasst zumindest:
- ein Substrat mit einer exponierten innenraumseitigen Oberfläche,
- auf der innenraumseitigen Oberfläche eine emissivitätsmindernde Beschichtung, enthaltend mindestens eine Schicht auf Basis eines transparenten leitfähigen Oxids (*transparent conductive oxide,* TCO),
   - -auf der emissivitätsmindernden Beschichtung eine Antireflexionsbeschichtung auf Basis von nanoporösem Siliziumoxid.

Die Erfindung umfasst außerdem ein Verfahren zur Herstellung einer Fahrzeugscheibe mit verminderter Emissivität und Lichtreflexion, wobei
(a) auf eine exponierte innenraumseitige Oberfläche eines Substrats eine emissivitätsmindernde Beschichtung aufgebracht wird, welche mindestens eine Schicht auf Basis eines transparenten leitfähigen Oxids (TCO) umfasst; und
(b) auf der emissivitätsmindernde Beschichtung eine Antireflexionsbeschichtung auf Basis von nanoporösem Siliziumoxid abgeschieden wird.

Die Erfindung beruht auf der Kombination der emissivitätsmindernden Beschichtung mit der speziellen Antireflexionsschicht, die aus nanoporösem Siliziumoxid ausgebildet ist. Die Lichtreflexion der innenraumseitigen Oberfläche wird wirksam reduziert, so dass weniger störende Spiegelungen auftreten. Die erfindungsgemäße Antireflexionsbeschichtung weist eine hohe mechanische und chemische Stabilität auf und reagiert wenig empfindlich auf Wasser oder organische Verschmutzungen. Gegenüber anderen Antireflexionsbeschichtungen, insbesondere Inferenzschichtsystemen aus alternierenden Schichten mit unterschiedlichem Brechungsindex, weist die erfindungsgemäße nanoporöse Antireflexionsbeschichtung eine Reihe von Vorteilen auf. So ist ihre Herstellung mit deutlich geringeren Kosten verbunden. Außerdem werden die antireflektierenden Eigenschaften über einen großen Bereich von Einfallswinkeln bereitgestellt. Des Weiteren können bessere antireflektierende Wirkungen erzielt werden, weil ein Inferenzschichtsystem zur optimalen Entspiegelung einer Glasoberfläche (Brechungsindex 1,5) eine niedrigbrechende Schicht mit einem Brechungsindex unter 1,5 erfordern würde. Hierfür kommen höchstens Fluoride (beispielsweise Magnesiumfluorid) in Betracht, die nicht gegenüber äußeren Einwirkungen hinreichend beständig sind und sich nicht mit magnetfeldunterstützter Kathodenabscheidung abscheiden lassen, was aber das üblicher Verfahren zur Herstellung dieser Beschichtungen ist. Mit der erfindungsgemäßen Beschichtung ist die Entspiegelung problemlos möglich. Das sind große Vorteile der vorliegenden Erfindung.

Die Fahrzeugscheibe wird im Folgenden vereinfacht auch als Scheibe bezeichnet. Die erfindungsgemäße Scheibe ist insbesondere eine Fensterscheibe und dafür vorgesehen, in einer Öffnung eines Fahrzeugs den Innenraum gegenüber der äußeren Umgebung abzutrennen. Die Scheibe ist besonders bevorzugt eine Fensterscheibe für ein Kraftfahrzeug, insbesondere für einen Personenkraftwagen, beispielsweise eine Dachscheibe, Windschutzscheibe, Seitenscheibe oder Heckscheibe. Die Scheibe ist bevorzugt gekrümmt, wie es im Fahrzeugbereich üblich ist. Die innenraumseitige Oberfläche des Substrats ist dabei in der Regel konkav gekrümmt.

Unter einer innenraumseitigen Oberfläche wird im Sinne der Erfindung diejenige Oberfläche verstanden, die dafür vorgesehen ist, in Einbaulage der Scheibe dem Innenraum zugewandt zu sein. Unter einer außenseitigen Oberfläche wird diejenige Oberfläche verstanden, die dafür vorgesehen ist, in Einbaulage der äußeren Umgebung zugewandt zu sein.

Die erfindungsgemäße Scheibe kann als Einzelglasscheibe ausgebildet sein und dabei das Substrat als einzige Scheibe umfassen. Das Substrat ist dabei bevorzugt vorgespannt, insbesondere thermisch vorgespannt. Die Scheibe ist dann ein sogenanntes Einscheibensicherheitsglas (ESG). Der erfindungsgemäße Scheibe kann aber auch als Verbundscheibe ausgebildet sein. Die Scheibe ist dann ein sogenanntes Verbundsicherheitsglas (VSG). Das Substrat ist dabei die Innenscheibe, denn nur diese weist eine exponierte innenraumseitige Oberfläche auf. Das Substrat ist über eine thermoplastische Zwischenschicht mit einer Außenscheibe verbunden. Mit Innenscheibe wird diejenige Scheibe der Verbundscheibe bezeichnet, die in Einbaulage dem Innenraum zugewandt ist. Mit Außenscheibe wird diejenige Scheibe der Verbundscheibe bezeichnet, die in Einbaulage der äußeren Umgebung zugewandt ist.

Unter einer exponierten Oberfläche wird im Sinne der Erfindung eine Oberfläche verstanden, die zugänglich ist und direkten Kontakt zur umgebenden Atmosphäre hat. Sie kann auch als externe Oberfläche bezeichnet werden. Eine exponierte Oberfläche ist zu unterscheiden von internen Oberflächen einer Verbundscheibe, die über die thermoplastische Zwischenschicht miteinander verbunden sind. Ist die Scheibe als Einzelglasscheibe ausgebildet, so sind beide Oberfläche des Substrats exponiert. Ist die Scheibe als Verbundscheibe ausgebildet, so sind die außenseitige Oberfläche der Außenscheibe und die innenraumseitige Oberfläche der Innenscheibe (also des erfindungsgemäßen Substrats) exponiert.

Auf der exponierten innenraumseitigen Oberfläche des Substrats ist erfindungsgemäß eine emissivitätsmindernde Beschichtung aufgebracht. Die emissivitätsmindernde Beschichtung kann auch als Wärmestrahlung reflektierende Beschichtung, Beschichtung niedriger Emissivität oder LowE-Beschichtung (*low emissivity*) bezeichnet werden. Mit Emissivität wird das Maß bezeichnet, welches angibt, wie viel Wärmestrahlung die Scheibe in Einbaulage im Vergleich zu einem idealen Wärmestrahler (einem schwarzen Körper) in einen Innenraum abgibt. Die emissivitätsmindernde Beschichtung hat die Funktion, die Einstrahlung von Wärme in den Innenraum zu vermeiden (IR-Anteile der Sonnenstrahlung und insbesondere die thermische Strahlung der Scheibe selbst) und ebenso die Abstrahlung von Wärme aus dem Innenraum heraus. Sie weist reflektierende Eigenschaften gegenüber infraroter Strahlung auf, insbesondere gegenüber Wärmestrahlung im Spektralbereich von 5 µm - 50 µm (vgl. auch Norm DIN EN 12898:2019-06). Dadurch wird der thermische Komfort im Innenraum wirkungsvoll verbessert. Die erfindungsgemäße emissivitätsmindernde Beschichtung kann dabei bei hohen Außentemperaturen und Sonneneinstrahlung besonders effektiv die von der gesamten Scheibe in Richtung des Innenraums abgestrahlte Wärmestrahlung zumindest teilweise reflektieren. Bei niedrigen Außentemperaturen kann die erfindungsgemäße Beschichtung effektiv die aus dem Innenraum abgestrahlte Wärmestrahlung reflektieren und somit die Wirkung der kalten Scheibe als Wärmesenke verringern. Üblicherweise werden die Oberflächen einer Verglasung von außen nach innen durchnummeriert, so dass die innenraumseitige Oberfläche bei Einfachverglasungen als "Seite 2" oder "Seite II" bezeichnet wird, bei Zweifachverglasungen (beispielsweise Verbundgläser oder Isolierverglasungen) als "Seite 4" oder "Seite IV".

Die emissivitätsmindernde Beschichtung enthält erfindungsgemäß zumindest eine Schicht auf Basis eines transparenten leitfähigen Oxids, welche reflektierenden Eigenschaften gegenüber Wärmestrahlung bereitstellt. Die Schicht auf Basis des transparenten leitfähigen Oxids wird im Folgenden auch als TCO-Schicht bezeichnet. TCO-Schichten sind korrosionsbeständig und können auf exponierten Oberflächen eingesetzt werden. Die emissivitätsmindernde Beschichtung kann darüber hinaus weitere Schichten aufweisen, insbesondere dielektrische Schichten, welche beispielsweise das optische Erscheinungsbild verbessern oder Diffusion verhindern oder steuern.

Die TCO-Schicht weist bevorzugt einen Brechungsindex von 1,7 bis 2,3 auf. Die TCO-Schicht kann beispielsweise auf Basis von Indium-Zinnoxid (ITO, *indium tin oxide*), Indium-Zink-Mischoxid (IZO), Aluminium-dotiertes Zinkoxid (AZO), Gallium-dotiertes Zinkoxid (GZO), Fluor-dotiertes Zinnoxid (FTO, SnO₂:F) oder Antimon-dotiertes Zinnoxid (ATO, SnO₂:Sb) ausgebildet sein.

In einer ersten vorteilhaften Ausgestaltung ist die TCO-Schicht auf Basis von Fluor-dotiertem Zinnoxid (FTO, SnO₂:F) oder Antimon-dotiertem Zinnoxid (ATO, SnO₂:Sb) ausgebildet und weist eine Dicke von 100 nm bis 600 nm auf. Die Schicht auf Basis von Fluor- oder Antimon-dotiertem Zinnoxid ist dabei bevorzugt die einzige Schicht der emissivitätsmindernden Beschichtung, das heißt die emissivitätsmindernde Beschichtung ist alleine durch die TCO-Schicht ausgebildet. Anders ausgedrückt besteht die die emissivitätsmindernde Beschichtung nur aus der TCO-Schicht. Alternativ kann die Beschichtung aber auch weitere Schichten umfassen, insbesondere Schichten unter der TCO-Schicht. Durch solche Unterschichten können beispielweise die Farbgebung oder die Haftung der Beschichtung beeinflusst werden. Die Schicht auf Basis von Fluor- oder Antimon-dotiertem Zinnoxid wird bevorzugt pyrolytisch oder durch chemische Gasphasenabscheidung (*chemical vapour deposition,* CVD) auf der Substratoberfläche abgeschieden, besonders bevorzugt im Rahmen eines Floatglas-Prozesses bei der Herstellung des Substrats. FTO und ATO sind gängige TCOs für Beschichtungen im Floatverfahren. Bei pyrolytischen Verfahren wird typischerweise eine Lösung auf die aushärtende Floatglas-Scheibe gegossen. Bei CVD-Verfahren wird das Gas typischerweise nach dem Floatbad zur Beschichtung eingelassen. Eine solche Beschichtung weist gute emissivitätsmindernde Eigenschaften auf und lässt sich kostengünstig und zeitsparend im Rahmen einer industriellen Massenfertigung aufbringen.

In einer zweiten vorteilhaften Ausgestaltung ist die emissivitätsmindernde Beschichtung eine Abfolge dünner Schichten (Schichtaufbau, Schichtstapel). Während die emissivitätsmindernden Eigenschaften durch die TCO-Schicht sichergestellt werden, so werden die optischen Eigenschaften, insbesondere die Transmission und Reflexivität, maßgeblich durch die übrigen Schichten beeinflusst und können durch deren Ausgestaltung gezielt eingestellt werden. Einen besonderen Einfluss haben in diesem Zusammenhang sogenannte Entspiegelungsschichten oder Antireflexionsschichten, die einen geringeren Brechungsindex aufweisen als die TCO-Schicht und unterhalb wie oberhalb derselben angeordnet sind. Diese Entspiegelungsschichten können insbesondere infolge von Interferenzeffekten die Transmission durch die Scheibe erhöhen und die Reflexivität verringern. Die Wirkung hängt entscheidend von Brechungsindex und Schichtdicke ab. In einer vorteilhaften Ausgestaltung umfasst die Beschichtung mindestens jeweils eine Entspiegelungsschicht unterhalb und oberhalb der TCO-Schicht, wobei die Entspiegelungsschichten einen geringeren Brechungsindex aufweisen als die TCO-Schicht, bevorzugt einen Brechungsindex von höchstens 1,8, insbesondere von höchstens 1,6.

Die TCO-Schicht ist in der zweiten vorteilhaften Ausgestaltung bevorzugt auf Basis von Indium-Zinnoxid (ITO) ausgebildet, was sich besonders bewährt hat, insbesondere aufgrund eines geringen spezifischen Widerstands und einer geringen Streuung hinsichtlich des Flächenwiderstands, was für konstante emissivitätsmindernde Eigenschaften vorteilhaft ist. Die Dicke der TCO-Schicht (ITO-Schicht) beträgt bevorzugt von 50 nm bis 150 nm, besonders bevorzugt von 60 nm bis 100 nm, beispielsweise von 65 nm bis 80 nm. Damit werden besonders gute Ergebnisse hinsichtlich der emissivitätsmindernden Wirkung erreicht bei gleichzeitiger hinreichender optischer Transparenz.

In der zweiten vorteilhaften Ausgestaltung umfasst die emissivitätsminderende Beschichtung bevorzugt eine dielektrische untere Entspiegelungsschicht, die unterhalb der TCO-Schicht angeordnet ist. Der Brechungsindex der unteren Entspiegelungsschicht beträgt bevorzugt höchstens 1,8, besonders bevorzugt von 1,3 bis 1,8. Die Dicke der unteren Entspiegelungsschicht beträgt bevorzugt von 5 nm bis 100 nm, bevorzugt von 10 nm bis 50 nm.

Die emissivitätsminderende Beschichtung umfasst auch bevorzugt eine dielektrische obere Entspiegelungsschicht, die oberhalb der TCO-Schicht angeordnet ist. Der Brechungsindex der oberen Entspiegelungsschicht beträgt bevorzugt höchstens 1,8, besonders bevorzugt von 1,3 bis 1,8. Die Dicke der oberen Entspiegelungsschicht beträgt bevorzugt von 10 nm bis 100 nm, besonders bevorzugt von 30 nm bis 70 nm, beispielsweise von 35 nm bis 50 nm.

In einer besonders vorteilhaften Ausgestaltung weist die Beschichtung sowohl eine untere Entspiegelungsschicht unterhalb der elektrisch leitfähigen Schicht als auch eine obere Entspiegelungsschicht oberhalb der elektrisch leitfähigen Schicht auf.

Die Entspiegelungsschichten bewirken insbesondere vorteilhafte optische Eigenschaften der Scheibe. So setzten sie den Reflexionsgrad herab und erhöhen dadurch die Transparenz der Scheibe und stellen einen neutralen Farbeindruck sicher. Die Entspiegelungsschichten enthalten bevorzugt ein Oxid oder Fluorid, besonders bevorzugt Siliziumoxid (SiO₂). Das Siliziumoxid kann Dotierungen aufweisen und ist bevorzugt mit Aluminium (SiO₂:Al), mit Bor (SiO₂:B), mit Titan (SiO₂:Ti) oder mit Zirkonium dotiert (SiO₂:Zr). Die Schichten können alternativ aber auch beispielsweise Aluminiumoxid, Magnesiumfluorid oder Kalziumfluorid enthalten.

Es hat sich gezeigt, dass der Sauerstoffgehalt der TCO-Schicht (insbesondere ITO-Schicht), einen wesentlichen Einfluss auf deren Eigenschaften hat, insbesondere auf die Transparenz und Leitfähigkeit. Die Herstellung der Scheibe umfasst typischerweise eine Temperaturbehandlung, beispielsweise einen thermischen Vorspannprozess oder einen Biegeprozess, wobei Sauerstoff zur TCO-Schicht diffundieren und diese oxidieren kann. In einer vorteilhaften Ausgestaltung umfasst die Beschichtung zwischen der TCO-Schicht und der oberen Entspiegelungsschicht eine dielektrische Barriereschicht zur Regulierung von Sauerstoffdiffusion mit einem Brechungsindex von mindestens 1,9. Die Barriereschicht dient dazu, die Sauerstoffzufuhr auf ein optimales Maß einzustellen.

Die dielektrische Barriereschicht zur Regulierung von Sauerstoffdiffusion enthält zumindest ein Metall, ein Nitrid oder ein Carbid. Die Barriereschicht kann beispielsweise Titan, Chrom, Nickel, Zirkonium, Hafnium, Niob, Tantal oder Wolfram enthalten oder ein Nitrid oder Carbid von Wolfram, Niob, Tantal, Zirkonium, Hafnium, Chrom, Titan, Silizium oder Aluminium. In einer bevorzugten Ausgestaltung enthält die Barriereschicht Siliziumnitrid (Si₃N₄) oder Siliziumcarbid, insbesondere Siliziumnitrid (Si₃N₄), womit besonders gute Ergebnisse erzielt werden. Das Siliziumnitrid kann Dotierungen aufweisen und ist in einer bevorzugten Weiterbildung mit Aluminium (Si₃N₄:Al), mit Zirkonium (Si₃N₄:Zr), mit Titan (Si₃N₄:Ti), oder mit Bor dotiert (Si₃N₄:B). Bei einer Temperaturbehandlung nach dem Aufbringen der erfindungsgemäßen Beschichtung kann das Siliziumnitrid teilweise oxidiert werden. Eine als Si₃N₄ abgeschiedene Barrriereschicht enthält dann nach der Temperaturbehandlung SiₓN_{y}O_{z}, wobei der Sauerstoffgehalt typischerweise von 0 Atom-% bis 35 Atom-% beträgt.

Die Dicke der Barriereschicht beträgt bevorzugt von 5 nm bis 20 nm, besonders bevorzugt von 7 nm bis 12 nm, beispielsweise von 8 nm bis 10 nm. Damit wird der Sauerstoffgehalt der TCO-Schicht (insbesondere ITO-Schicht) besonders vorteilhaft reguliert. Die Dicke der Barriereschicht wird hinsichtlich der Sauerstoffdiffusion gewählt, weniger hinsichtlich der optischen Eigenschaften der Scheibe. Es hat sich jedoch gezeigt, dass Barriereschichten mit Dicken im angegebenen Bereich mit der erfindungsgemäßen Beschichtung und deren optischen Anforderungen kompatibel sind.

Die emissivitätsmindernde Beschichtung umfasst in der zweiten vorteilhaften Ausgestaltung unterhalb der elektrisch leitfähigen Schicht, und gegebenenfalls unterhalb der unteren Entspiegelungsschicht, bevorzugt eine dielektrische Blockerschicht gegen Alkalidiffusion. Durch die Blockerschicht wird die Diffusion von Alkali-Ionen aus dem Glassubstrat in das Schichtsystem reduziert oder unterbunden. Alkali-Ionen können die Eigenschaften der Beschichtung negativ beeinflussen. Weiterhin trägt die Blockerschicht im Zusammenspiel mit der unteren Entspiegelungsschicht zur Einstellung der Optik des Gesamtschichtaufbaus vorteilhaft bei. Der Brechungsindex der Blockerschicht beträgt bevorzugt mindestens 1,9. Die Blockerschicht enthält bevorzugt ein Oxid, ein Nitrid oder ein Carbid, bevorzugt von Wolfram, Chrom, Niob, Tantal, Zirkonium, Hafnium, Titan, Silizium oder Aluminium, beispielsweise Oxide wie WO₃, Nb₂O₅, Bi₂O₃, TiO₂, Ta₂O₅, Y₂O₃, ZrO₂, HfO₂ SnO₂, oder ZnSnOₓ, oder Nitride wie AIN, TiN, TaN, ZrN oder NbN. Die Blockerschicht enthält besonders bevorzugt Siliziumnitrid (Si₃N₄), womit besonders gute Ergebnisse erzielt werden. Das Siliziumnitrid kann Dotierungen aufweisen und ist in einer bevorzugten Weiterbildung mit Aluminium (Si₃N₄:Al), mit Titan (Si₃N₄:Ti), mit Zirkonium (Si₃N₄:Zr) oder mit Bor dotiert (Si₃N₄:B). Die Dicke der Blockerschicht beträgt bevorzugt von 10 nm bis 50 nm, besonders bevorzugt von von 20 nm bis 40 nm, beispielsweise von 25 nm bis 35 nm. Die Blockerschicht ist bevorzugt die unterste Schicht des Schichtstapels, hat also direkten Kontakt zur Substratoberfläche, wo sie ihre Wirkung optimal entfalten kann.

In einer besonders bevorzugten Ausbildung der zweiten vorteilhaften Ausgestaltung umfasst die emissivitätsmindernde Beschichtung ausgehend vom Substrat die folgenden Schichten:
- eine Blockerschicht gegen Alkalidiffusion mit einem Brechungsindex von mindestens 1,9,
- eine untere Entspiegelungsschicht mit einem Brechungsindex von höchstens 1,8,
- die Schicht auf Basis eines transparenten leitfähigen Oxids, welches Indium-Zinn-Oxid (ITO) ist,
- ein Barriereschicht zur Regulierung von Sauerstoffdiffusion mit einem Brechungsindex von mindestens 1,9,
- eine obere Entspiegelungsschicht mit einem Brechungsindex von höchstens 1,8.

Hinsichtlich der bevorzugten Schichtdicken gelten die vorstehenden Ausführungen zu den jeweiligen Einzelschichten.

Die Beschichtung besteht in einer besonders bevorzugten Ausbildung der zweiten vorteilhaften Ausgestaltung ausschließlich aus Schichten mit einem Brechungsindex von mindestens 1,9 oder von höchstens 1,8, bevorzugt höchstens 1,6. In einer besonders bevorzugten Ausgestaltung besteht die Beschichtung nur aus den beschriebenen Schichten und enthält keine weiteren Schichten. Die Beschichtung besteht dann aus folgenden Schichten in der angegebenen Reichenfolge ausgehend von der Substratoberfläche:
- - Blockerschicht gegen Alkalidiffusion
- - untere Entspiegelungsschicht
- - TCO-Schicht, insbesondere ITO-Schicht
- - Barriereschicht zur Regulierung von Sauerstoffdiffusion
- - obere Entspiegelungsschicht

Hinsichtlich der bevorzugten Schichtdicken und Materialien gelten die vorstehenden Ausführungen zu den jeweiligen Einzelschichten.

Die Schichten in der zweiten vorteilhaften Ausgestaltung werden bevorzugt durch magnetfeldunterstützte Kathodenzerstäubung abgeschieden. Das ist besonders vorteilhaft im Hinblick auf eine einfache, schnelle, kostengünstige und gleichmäßige Beschichtung des Substrats. Die Kathodenzerstäubung erfolgt in einer Schutzgasatmosphäre, beispielsweise aus Argon, beziehungsweise in einer Reaktivgasatmosphäre, beispielsweise durch Zugabe von Sauerstoff oder Stickstoff. Die Schichten können aber auch durch andere, dem Fachmann bekannte Verfahren aufgebracht werden, beispielsweise durch Aufdampfen oder chemische Gasphasenabscheidung (*chemical vapour deposition,* CVD), durch Atomlagenabscheidung (*atomic layer deposition,* ALD), durch plasmagestützte Gasphasenabscheidung (PECVD) oder durch nasschemische Verfahren.

Eine dritte vorteilhafte Ausgestaltung kann gleichsam als Weiterbildung der zweiten vorteilhaften Ausgestaltung angesehen. Die dritte vorteilhafte Ausgestaltung umfasst alle Schichten der zweiten vorteilhaften Ausgestaltung, nicht jedoch die obere Entspiegelungsschicht. Es hat sich gezeigt, dass auf die obere Entspiegelungsschicht verzichtet werden kann, weil deren Funktion durch die darüber abgeschiedene Antireflexionsbeschichtung erfüllt wird. Die Ausführungen zur zweiten vorteilhaften Ausgestaltung, insbesondere hinsichtlich bevorzugter Materialen und Schichtdicken der Einzelschichten, gelten für die dritte vorteilhafte Ausgestaltung entsprechend. Die emissivitätsmindernde Beschichtung umfasst besonders bevorzugt ausgehend vom Substrat die folgenden Schichten:
- eine Blockerschicht gegen Alkalidiffusion mit einem Brechungsindex von mindestens 1,9,
- eine untere Entspiegelungsschicht mit einem Brechungsindex von höchstens 1,8,
- die Schicht auf Basis eines transparenten leitfähigen Oxids, welches Indium-Zinn-Oxid (ITO) ist,
- ein Barriereschicht zur Regulierung von Sauerstoffdiffusion mit einem Brechungsindex von mindestens 1,9.

Die Beschichtung besteht in einer besonders bevorzugten Ausbildung der dritten vorteilhaften Ausgestaltung ausschließlich aus Schichten mit einem Brechungsindex von mindestens 1,9 oder von höchstens 1,8, bevorzugt höchstens 1,6. In einer besonders bevorzugten Ausgestaltung besteht die Beschichtung nur aus den beschriebenen Schichten und enthält keine weiteren Schichten. Die Beschichtung besteht dann aus folgenden Schichten in der angegebenen Reichenfolge ausgehend von der Substratoberfläche:
- - Blockerschicht gegen Alkalidiffusion
- - untere Entspiegelungsschicht
- - TCO-Schicht, insbesondere ITO-Schicht
- - Barriereschicht zur Regulierung von Sauerstoffdiffusion

Die Scheibe wird nach dem Aufbringen der emissivitätsmindernden Beschichtung einer Temperaturbehandlung unterzogen, durch die insbesondere die Kristallinität der TCO-Schicht verbessert wird. Die Temperaturbehandlung erfolgt bevorzugt bei mindestens 300°C. Die Temperaturbehandlung verringert insbesondere den Flächenwiderstand der Beschichtung. Außerdem werden die optischen Eigenschaften der Scheibe deutlich verbessert, insbesondere die Transmission erhöht. Die Temperaturbehandlung kann auf verschiedene Arten erfolgen, beispielsweise durch Erwärmen der Scheibe mittels eines Ofens oder eines Heizstrahlers. Alternativ kann die Temperaturbehandlung auch durch Bestrahlung mit Licht erfolgen, beispielsweise mit einer Lampe oder einem Laser als Lichtquelle. Die Temperaturbehandlung muss aber nicht als separater Schritt erfolgen, sondern kann auch beispielsweise im Rahmen eines Biegeprozesses oder thermischen Vorspannprozesses oder im Rahmen der Herstellung der Antireflexionsbeschichtung erfolgen.

Oberhalb der emissivitätsmindernden Beschichtung ist erfindungsgemäß eine Antireflexionsbeschichtung angeordnet. Bevorzugt ist die Antireflexionsbeschichtung direkt auf der emissivitätsmindernden Beschichtung abgeschieden, das heißt es sind keine weiteren Schichten zwischen der emissivitätsmindernden Beschichtung und der Antireflexionsbeschichtung angeordnet. Bevorzugt ist die Antireflexionsbeschichtung die oberste Beschichtung des Substrats, das heißt es sind keine weiteren Schichten oberhalb der Antireflexionsbeschichtung angeordnet.

Die erfindungsgemäße Antireflexionsbeschichtung ist auf Basis von nanoporösem Siliziumoxid ausgebildet. Die antireflektierende Wirkung wird einerseits durch den Brechungsindex und andererseits durch die Dicke der Antireflexionsbeschichtung bestimmt. Der Brechungsindex hängt wiederum von der Porengröße und die Dichte der Poren ab. In einer bevorzugten Ausgestaltung sind die Poren derart abgemessen und verteilt, dass der Brechungsindex von 1,2 bis 1,4, besonders bevorzugt von 1,25 bis 1,35 beträgt. Die Dicke der Antireflexionsbeschichtung beträgt bevorzugt von 30 nm bis 500 nm, besonders bevorzugt von 50 nm bis 150 nm. Damit werden gute antireflektierende Eigenschaften erreicht.

Das Siliziumoxid kann dotiert sein, beispielsweise mit Aluminium, Zirkonium, Titan, Bor, Zinn oder Zink. Durch Dotierungen können insbesondere die optischen, mechanischen und chemischen Eigenschaften der Beschichtung angepasst werden.

Die Antireflexionsbeschichtung umfasst bevorzugt nur eine homogene Schicht aus nanoporösem Siliziumoxid. Es ist aber auch möglich, die Antireflexionsbeschichtung aus mehreren Schichten von nanoporösem Siliziumoxid auszubilden, die sich beispielsweise hinsichtlich der Porosität (Größe und/oder Dichte der Poren) unterscheiden. So kann gleichsam ein Verlauf von Brechungsindizes erzeugt werden.

Die Poren sind insbesondere geschlossene Nanoporen, können aber auch offene Poren sein. Unter Nanoporen werden Poren verstanden, die Größen im Nanometerbereich aufweisen, also von 1 nm bis weniger als 1000 nm (1 µm). Die Poren weisen bevorzugt einen im Wesentlichen kreisförmigen Querschnitt auf (sphärische Poren), können aber auch andere Querschnitte aufweisen, beispielsweise einen elliptischen, ovalen oder elongierten Querschnitt (ellipsoide oder ovoide Poren). Bevorzugt weisen mindestens 80% aller Poren im Wesentlichen die gleiche Querschnittsform auf. Es kann vorteilhaft sein, wenn die Porengröße mindestens 20 nm oder sogar mindestens 40 nm beträgt. Die durchschnittliche Größe der Poren beträgt bevorzugt von 1 nm bis 500 nm, besonders bevorzugt von 1 nm bis 100 nm, ganz besonders bevorzugt von 20 nm bis 80 nm. Unter der Größe der Poren wird bei kreisförmigen Poren der Durchmesser verstanden, bei Poren anderer Gestalt die größte Längenausdehnung. Bevorzugt weisen mindestens 80% aller Poren Größen in den angegebenen Bereichen auf, besonders bevorzugt liegen die Größen sämtlicher Poren in den angegebenen Bereichen. Der Anteil an Porenvolumen am Gesamtvolumen liegt bevorzugt zwischen 10% und 90%, besonders bevorzugt unter 80%, ganz besonders bevorzugt kleiner als 60 %.

Die Antireflexionsbeschichtung ist insbesondere eine Sol-Gel-Beschichtung. Sie wird in einem Sol-Gel-Prozess auf der emissivitätsmindernden Beschichtung abgeschieden. Zunächst wird ein Sol, welches die Präkursoren der Beschichtung enthält, bereitgestellt und gereift. Die Reifung kann eine Hydrolyse der Präkursoren beinhalten und/oder eine (partielle) Reaktion zwischen den Präkursoren. Dieses Sol wird im Sinne der Erfindung als Präkursoren-Sol bezeichnet und enthält Siliziumoxid-Präkursoren in einem Lösungsmittel. Die Präkursoren sind bevorzugt Silane, insbesondere Tetraethoxy-Silane oder Methyltriethoxysilan (MTEOS). Alternativ können aber auch Silikate als Präkursoren eingesetzt werden, insbesondere Natrium-, Lithium- oder Kaliumsilikate, beispielsweise Tetramethylorthosilikat, Tetraethylorthosilikat (TEOS), Tetraisopropylorthosilikat, oder Organosilane der allgemeinen Form R²ₙSi(OR¹)₄₋ₙ. Dabei ist bevorzugt R¹ eine Alkylgruppe, R² eine Alkyl-, Epoxy-, Acrylat-, Methacrylat-, Amin-, Phenyl- oder Vinylgruppe, und n eine ganze Zahl von 0 bis 2. Es können auch Silizium-halogenide oder -alkoxide eingesetzt werden. Das Lösungsmittel ist bevorzugt Wasser, Alkohol (insbesondere Ethanol) oder ein Wasser-Alkohol-Gemisch.

Das Präkursoren-Sol wird dann mit einem Porenformer vermischt, der ein einer wässrigen Phase dispergiert ist. Aufgabe des Porenformers ist es, gleichsam als Platzhalter bei der Erzeugung der Antireflexionsbeschichtung die Poren in der Siliziumoxidmatrix zu erzeugen. Durch Form, Größe und Konzentration des Porenformers werden Form, Größe und Dichte der Poren bestimmt. Durch den Porenformer können Porengröße, Porenverteilung und Porendichte gezielt gesteuert werden und es werden reproduzierbare Ergebnisse sichergestellt. Als Porenformer können beispielsweise Polymer-Nanopartikel eingesetzt werden, bevorzugt PMMA-Nanopartikel (Polymethylmethacrylat), alternativ aber auch Nanopartikel aus Polycarbonaten, Polyestern oder Polystyrolen, oder Copolymeren aus Methyl(meth)acrylaten und (Meth)acrylsäure. Anstatt Polymer-Nanopartikeln können auch Nanotropfen eines Öls in Form einer Nanoemulsion verwendet werden. Natürlich ist es auch denkbar, verschiedene Porenformer einzusetzen.

Die so erhaltene Lösung wird auf die innenraumseitige Oberfläche des Substrats aufgebracht. Dies erfolgt sinnvollerweise durch nasschemische Verfahren, beispielsweise durch Tauchbeschichtung (*dip coating*)*,* Schleuderbeschichtung (*spin coating*), Flutbeschichtung (*flow coating*)*,* durch Auftragen mittels Rollen oder Pinseln oder durch Sprühbeschichtung (*spray coating*)*.* Im Anschluss kann eine Trocknung erfolgen, wobei Lösungsmittel verdampft wird. Diese Trocknung kann bei Umgebungstemperatur oder durch gesonderte Beheizung erfolgen (beispielsweise mit einer Temperatur bis zu 120 °C). Vor dem Aufbringen der Beschichtung auf das Substrat wird die Oberfläche typischerweise gereinigt durch an sich bekannte Verfahren.

Anschließend wird das Sol kondensiert. Dabei bildet sich die Siliziumoxid-Matrix um die Porenformer aus. Die Kondensation kann eine Temperaturbehandlung umfassen, beispielsweise bei einer Temperatur von beispielsweise bis zu 350 °C. Weisen die Präkursoren UV-vernetzbare funktionelle Gruppen auf (beispielsweise Methacrylat-, Vinyl- oder Acrylatgruppe), so kann die Kondensation eine UV-Behandlung umfassen. Die Kondensation kann alternativ bei geeigneten Präkursoren (beispielsweise Silikate) eine IR-Behandlung umfassen. Optional kann Lösungsmittel bei einer Temperatur von bis zu 120 °C verdampft werden.

Dann wird der Porenformer optional wieder entfernt. Dazu wird das beschichtete Substrat bevorzugt einer Hitzebehandlung bei einer Temperatur von mindestens 400 °C unterzogen, bevorzugt mindestens 500 °C, wobei sich die Porenformer zersetzen. Organische Porenformer werden dabei insbesondere verkohlt (karbonisiert). Die Hitzebehandlung kann im Rahmen eines Biegeprozesses oder thermischen Vorspannprozesses erfolgen. Die Hitzebehandlung wird bevorzugt über einen Zeitraum von höchstens 15 min durchgeführt, besonders bevorzugt höchstens 5 min. Neben der Entfernung der Porenformer kann die Hitzebehandlung auch dazu dienen, die Kondensation zu komplettieren und die Beschichtung dadurch zu verdichten, was ihre mechanischen Eigenschaften verbessert, insbesondere ihre Stabilität.

Statt mittels der Hitzebehandlung kann der Porenformer auch durch Lösungsmittel aus der Beschichtung herausgelöst werden. Im Falle von Polymer-Nanopartikeln muss das entsprechende Polymer in dem Lösungsmittel löslich sein, beispielweise kann im Falle von PMMA-Nanopartikeln Tetrahydrofuran (THF) verwendet werden.

Das Entfernen des Porenformers ist bevorzugt, wodurch leere Poren erzeugt werden. Prinzipiell ist es aber auch möglich, den Porenformer in den Poren zu belassen. Sofern er einen anderen Brechungsindex aufweist als das Siliziumoxid, wird auch so eine antireflektierende Wirkung erreicht. Die Poren sind dann mit dem Porenformer gefüllt, beispielsweise mit PMMA-Nanopartikeln. Es können auch hohle Partikel als Porenformer verwendet werden, beispielsweise hohle Polymernanopartikel wie PMMA-Nanopartikel oder hohle Siliziumoxid-Nanopartikel. Wird ein solcher Porenformer in den Poren belassen und nicht entfernt, so weisen die Poren einen hohlen Kern und einen mit dem Porenformer gefüllten Randbereich auf.

Das beschriebene Sol-Gel-Verfahren ermöglicht die Herstellung einer Antireflexionsschicht mit einer regelmäßigen, homogenen Verteilung der Poren. Die Porenform, -größe und -dichte können gezielt eingestellt werden und die Beschichtung weist eine geringe Tortuosität auf.

Die innenraumseitige Oberfläche des Substrats weist bevorzugt außer der emissivitätsmindernden Beschichtung und der Antireflexionsbeschichtung keine weiteren Schichten oder Beschichtungen auf.

Das Substrat ist aus einem elektrisch isolierenden, insbesondere starren Werkstoff gefertigt, vorzugsweise aus Glas oder Kunststoff. Das Substrat enthält in einer bevorzugten Ausgestaltung Kalk-Natron-Glas, kann aber grundsätzlich auch andere Glassorten enthalten, beispielsweise Borsilikatglas oder Quarzglas. Das Substrat enthält in einer weiteren bevorzugten Ausgestaltung Polycarbonat (PC) oder Polymethylmethacrylat (PMMA). Das Substrat kann weitestgehend transparent oder auch getönt oder gefärbt sein. Das Substrat weist bevorzugt eine Dicke von 0,1 mm bis 20 mm auf, typischerweise von 1 mm bis 5 mm. Das Substrat kann plan oder gebogen ausgebildet sein.

Das Substrat kann mit einer Außenscheibe zu einer Verbundscheibe verbunden sein. Die Außenscheibe ist bevorzugt aus Glas gefertigt, insbesondere Kalk-Natron-Glas und weist bevorzugt eine Dicke von 0,1 mm bis 20 mm auf, typischerweise von 2 mm bis 5 mm. Alternativ kommen auch für die Außenscheibe Kunststoffe wie PMMA oder PC in Frage. Die Zwischenschicht zwischen Substrat und Außenscheibe ist typischerweise aus mindestens einer thermoplastischen Folie gefertigt, bevorzugt auf Basis von Polyvinylbutyral (PVB), Ethylenvinylacetat (EVA) oder Polyurethan (PU). Typische Foliendicken liegen im Bereich von 0,2 mm bis 1 mm, beispielsweise 0,38 mm oder 0,76 mm.

In einer Weiterbildung der Erfindung ist die innenraumseitige, der Zwischenschicht zugewandte Oberfläche der Außenscheibe mit einer Sonnenschutzbeschichtung ausgestattet. Darunter wird eine IR-reflektierende Beschichtung verstanden, deren Reflexionseigenschaften im Unterschied zur emissivitätsmindernden Beschichtung insbesondere im nahen IR-Bereich ausgeprägt ist. Es eignen sich insbesondere Beschichtungen mit einer oder mehreren funktionellen Schichten auf Basis von Silber. Die Sonnenschutzbeschichtung umfasst daneben typischerweise weitere dielektrische Schichten, die beispielsweise als Entspiegelungsschichten, Anpassungsschichten oder Blockerschichten dienen. Solche Sonnenschutzbeschichtungen sind dem Fachmann hinlänglich bekannt. Der Wärmeeintrag in den Innenraum kann durch die Sonnenschutzbeschichtung weiter verringert werden.

Die Erfindung umfasst außerdem die Verwendung einer erfindungsgemäßen Scheibe in Fortbewegungsmitteln für den Verkehr auf dem Lande, in der Luft oder zu Wasser. Die Scheibe wird dabei bevorzugt Fensterscheibe verwendet, beispielsweise als Dachscheibe, Seitenscheibe, Heckscheibe oder Windschutzscheibe eines Fahrzeugs, insbesondere Kraftfahrzeugs.

Die erfindungsgemäßen Beschichtungen (emissivitätsmindernde Beschichtung und Antireflexionsbeschichtung) sind transparent, schränken die Durchsicht durch die Scheibe also nicht merklich ein. Die Absorption der Beschichtung beträgt bevorzugt von etwa 1 % bis etwa 20 % im sichtbaren Spektralbereich. Unter dem sichtbaren Spektralbereich wird der Spektralbereich von 380 nm bis 780 nm verstanden.

Die emissivitätsmindernde Beschichtung und die Antireflexionsbeschichtung ist typischerweise vollflächig auf der Substratoberfläche aufgebracht, eventuell mit Ausnahme eines umlaufenden Randbereichs und/oder anderer lokal begrenzter Bereich, die beispielsweise zur Datenübertragung dienen können. Der beschichtete Anteil der Substratoberfläche beträgt bevorzugt mindestens 90%, besonders bevorzugt 100%.

In einer bevorzugten Ausgestaltung weist die erfindungsgemäße Scheibe eine Transmission im sichtbaren Spektralbereich von kleiner als 10 % auf. Solche Scheiben sind insbesondere als Dachscheiben geeignet. Die geringe Transmission kann durch ein getöntes Substrat und/oder (im Falle einer Verbundscheibe) durch eine getönte Außenscheibe und/oder eine getönte Zwischenschicht erreicht werden.

Die innenraumseitige Emissivität der erfindungsgemäßen Scheibe beträgt bevorzugt kleiner oder gleich 45%, besonders bevorzugt kleiner oder gleich 35%, ganz besonders bevorzugt kleiner oder gleich 30%. Mit innenraumseitiger Emissivität wird dabei das Maß bezeichnet, welches angibt, wie viel Wärmestrahlung die Scheibe in Einbaulage im Vergleich zu einem idealen Wärmestrahler (einem schwarzen Körper) in einen Innenraum, beispielsweise eines Gebäudes oder eines Fahrzeugs abgibt. Unter Emissivität wird im Sinne der Erfindung der normale Emissionsgrad bei 283 K nach der Norm EN 12898 verstanden.

Ist eine erste Schicht oberhalb einer zweiten Schicht angeordnet, so bedeutet dies im Sinne der Erfindung, dass die erste Schicht weiter vom Substrat entfernt angeordnet ist als die zweite Schicht. Ist eine erste Schicht unterhalb einer zweiten Schicht angeordnet ist, so bedeutet dies im Sinne der Erfindung, dass die zweite Schicht weiter vom Substrat entfernt angeordnet ist als die erste Schicht. Ist eine erste Schicht oberhalb oder unterhalb einer zweiten Schicht angeordnet, so bedeutet dies im Sinne der Erfindung nicht notwendigerweise, dass sich die erste und die zweite Schicht in direktem Kontakt miteinander befinden. Es können eine oder mehrere weitere Schichten zwischen der ersten und der zweiten Schicht angeordnet sein, sofern dies nicht explizit ausgeschlossen wird.

Enthält eine Schicht oder ein sonstiges Element zumindest ein Material, so schließt das im Sinne der Erfindung den Fall ein, dass die Schicht aus dem Material besteht, was grundsätzlich auch bevorzugt ist. Die im Rahmen der vorliegenden Erfindung beschriebenen Verbindungen, insbesondere Oxide, Nitride und Carbide können grundsätzlich stöchiometrisch, unterstöchiometrisch oder überstöchiometrisch sein, auch wenn dem besseren Verständnis halber die stöchiometrischen Summenformeln erwähnt werden.

Ist eine Schicht auf Basis eines Materials ausgebildet, so besteht die Schicht mehrheitlich aus diesem Material, insbesondere im Wesentlichen aus diesem Material neben etwaigen Verunreinigungen oder Dotierungen.

Angegebene Brechungsindizes beziehen sich immer auf eine Wellenlänge von 550 nm. Angegebene Dicken beziehen sich immer auf die geometrische Dicke, sofern nicht explizit anders angegeben.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

### Es zeigen:

- Fig. 1: einen Querschnitt durch eine Ausgestaltung der erfindungsgemäßen Scheibe,
- Fig. 2: einen Querschnitt durch das Substrat mit der emissivitätsmindernden Beschichtung und der Antireflexionsbeschichtung einer Ausgestaltung der erfindungsgemäßen Scheibe,
- Fig. 3: einen Querschnitt durch das Substrat mit der emissivitätsmindernden Beschichtung und der Antireflexionsbeschichtung einer weiteren Ausgestaltung der erfindungsgemäßen Scheibe,
- Fig. 4: einen Querschnitt durch eine weitere Ausgestaltung der erfindungsgemäßen Scheibe,

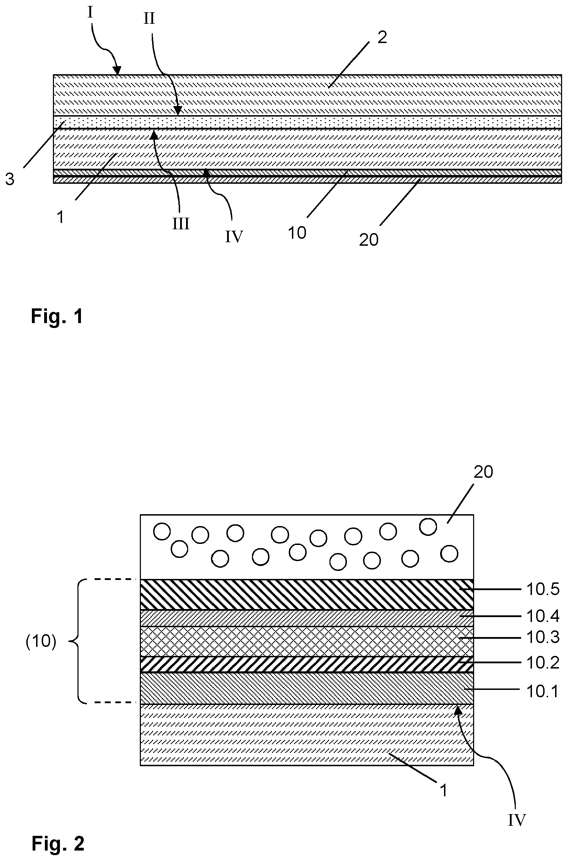

Fig. 1 zeigt einen Querschnitt durch eine Ausgestaltung der erfindungsgemäßen Scheibe mit verminderter Emissivität und Lichtreflexion. Die Scheibe ist als Verbundscheibe ausgebildet aus einem Substrat 1 und einer Außenscheibe 2, die über eine thermoplastische Zwischenschicht 3 miteinander verbunden sind. Das Substrat 1 fungiert als Innenscheibe der Verbundscheibe. Die Verbundschiebe ist beispielsweise die Dachscheibe eines Kraftfahrzeugs. Die Außenscheibe 2 weist eine außenseitige Oberfläche I und eine innenraumseitige Oberfläche II auf. Ebenso weist das Substrat 1 eine außenseitige Oberfläche III und eine innenraumseitige Oberfläche IV auf. Die außenseitige Oberfläche I der Außenscheibe 2 und die innenraumseitige Oberfläche IV des Substrats 1 sind die exponierten Oberflächen der Verbundscheibe, wobei die Oberfläche I in Einbaulage der äußeren Umgebung zugewandt ist und die Oberfläche IV dem Innenraum des Fahrzeugs. Das Substrat 1 und die Außenscheibe 2 sind beispielsweise Scheiben aus getöntem Kalk-Natron-Glas mit einer Dicke von jeweils 2,1 mm. Die Zwischenschicht 3 ist beispielsweise aus einer 0,76 mm dicken, getönten Folien aus Polyvinylbutyral (PVB) ausgebildet.

Auf der exponierten, innenraumseitigen Oberfläche IV des Substrats 1 ist eine emissivitätsmindernde Beschichtung 10 aufgebracht (Low-E-Beschichtung). Die Beschichtung 10 verbesserten den thermischen Komfort im Innenraum des Fahrzeugs, indem bei hohen Außentemperaturen Wärmestrahlung der Scheibe sowie Anteile der Sonnenstrahlung reflektiert werden und bei geringen Außentemperaturen die Auskühlung des Innenraums verringert wird. Auf der emissivitätsmindernden Beschichtung 10 ist eine Antireflexionsbeschichtungen 20 aufgebracht. Sie verringert die Lichtreflexion der Oberfläche IV mit der emissivitätsmindernden Beschichtung 10, so dass sich beispielsweise eine elektronische Anzeige im Bereich des Armaturenbretts weniger stark an der Dachscheibe spiegeln.

Fig. 2 zeigt eine Ausgestaltung der erfindungsgemäßen Beschichtungen 10, 20 auf dem Substrat 1. Die emissivitätsmindernde Beschichtung 10 ist eine Abfolge dünner Schichten, die ausgehend vom Substrat 1 aus folgenden Einzelschichten besteht: eine Blockerschicht 10.1 gegen Alkalidiffusion, eine untere Entspiegelungsschicht 10.2, eine Schicht 10.3 auf Basis von ITO, eine Barriereschicht 10.4 zur Regulierung der Sauerstoffdiffusion und eine obere Entspiegelungsschicht 10.5. Die einzelnen Schichten der Beschichtung 10 wurden durch magnetfeldunterstützte Kathodenstrahlzerstäubung abgeschieden.

Die Antireflexionsschicht 20 ist eine einzelne Schicht aus nanoporösem Siliziumoxid (SiO₂), die im Sol-Gel-Verfahren auf der emissivitätsmindernden Beschichtung 10 abgeschieden wurde. Die Porengröße und -dichte wurde dabei mittels Porenformern derart eingestellt, dass der Brechungsindex der Antireflexionsbeschichtung etwa 1,3 beträgt.

Die Materialien und Schichtdicken sind in Tabelle 1 beispielhaft zusammengefasst.

**Tabelle 1**

| **Schicht** | **Bezugszeichen** | | **Material** | **Dicke** |
|---|---|---|---|---|
| Antireflexionsbeschichtung | 20 | | Nanoporöses SiO₂ | 100 nm |
| obere Entspiegelungsschicht | 10.5 | 10 | SiO₂:Al | 38 nm |
| Barriereschicht | 10.4 | | Si₃N₄:Al | 8 nm |
| elektrisch leitfähige Schicht | 10.3 | | ITO | 68 nm |
| untere Entspiegelungsschicht | 10.2 | | SiO₂:Al | 20 nm |
| Blockerschicht | 10.1 | | Si₃N₄:Al | 25 nm |
| Substrat | 1 | | Kalk-Natron-Glas, getönt | 2,1 mm |
| Zwischenschicht | 3 | | PVB | 0,76 mm |
| Außenscheiben | 2 | | Kalk-Natron-Glas, getönt | 2,1 mm |

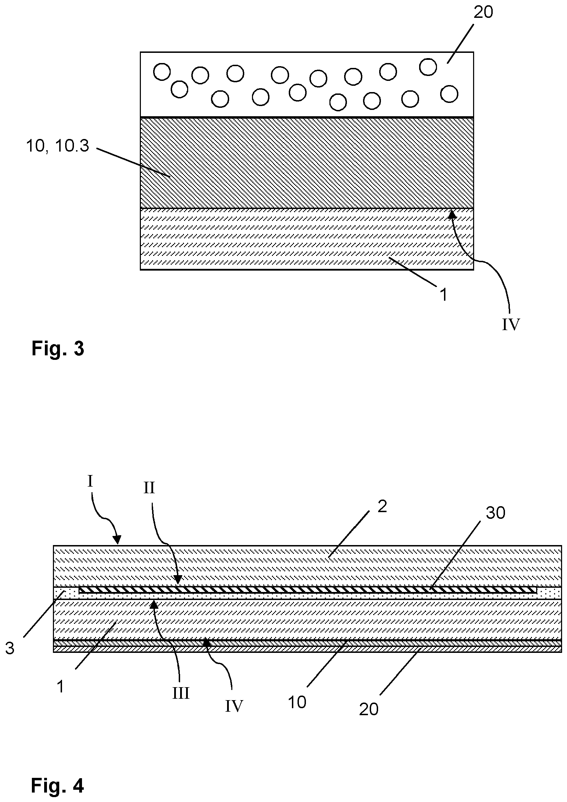

Fig. 3 zeigt eine weitere Ausgestaltung der erfindungsgemäßen Beschichtungen 10, 20 auf dem Substrat 1. Die emissivitätsmindernde Beschichtung 10 ist eine einzelnen Schicht 10.3 auf Basis von Fluor-dotiertem Zinnoxid (SnO₂:F), die pyrolytisch bei der Herstellung des Substrats 1 im Floatverfahren aufgebracht wurde. Die Antireflexionsschicht 20 ist auch hier eine einzelne Schicht aus nanoporösem Siliziumoxid (SiO₂), die im Sol-Gel-Verfahren auf der emissivitätsmindernden Beschichtung 10 abgeschieden wurde. Die Porengröße und -dichte wurde dabei mittels Porenformern derart eingestellt, dass der Brechungsindex der Antireflexionsbeschichtung etwa 1,3 beträgt.

Die Materialien und Schichtdicken sind in Tabelle 2 beispielhaft zusammengefasst.

**Tabelle 2**

| **Schicht** | **Bezugszeichen** | | **Material** | **Dicke** |
|---|---|---|---|---|
| Antireflexionsbeschichtung | 20 | | Nanoporöses SiO₂ | 140 nm |
| elektrisch leitfähige Schicht | 10.3 | 10 | SnO₂:F | 380 nm |
| Substrat | 1 | | Kalk-Natron-Glas, getönt | 3,85 mm |

In der Ausgestaltung der Tabelle 1 ist die Scheibe als Verbundscheibe ausgebildet, in der Ausgestaltung der Tabelle 2 als thermisch vorgespannte Einzelglasscheibe. Dies ist lediglich beispielhaft zu verstehen. Ebenso ist es möglich, die als Dünnschichtstapel ausgebildete emissivitätsmindernde Beschichtung 10 (Tabelle 1) auf einer Einzelglasscheibe einzusetzen und die pyrolytische emissivitätsmindernde Beschichtung 10 (Tabelle 2) auf einer Verbundscheibe.

Fig. 4 zeigt einen Querschnitt durch eine Ausgestaltung der erfindungsgemäßen Scheibe mit verminderter Emissivität und Lichtreflexion. Substrat 1, Außenscheibe 2, Zwischenschicht 3, emissivitätsmindernde Beschichtung 10 und Antireflexionsbeschichtung 20 sind wie in Figur 1 ausgebildet. Zusätzlich ist auf der innenraumseitigen Oberfläche II der Außenscheibe eine IR-reflektierende Beschichtung 30 aufgebracht. Die Beschichtung 30 dient als Sonnenschutzbeschichtung. Sie ist ein Dünnschichtstapel umfassend mehrere Silberschichten und zahlreiche dielektrische Schichten. Solche IR-reflektierenden Beschichtungen auf Basis von Silber sind an sich bekannt. Sie reflektieren Sonnenstrahlung, insbesondere im nahen IR-Bereich und verbessern dadurch weiter den thermischen Komfort, indem die Aufheizung der Verbundschiebe und die Transmission von IR-Strahlung verringert wird.

### Beispiele

Tabelle 3 zeigt Materialien und Schichtdicken zweier Beispiele 1 und 2 des Typs nach Figur 2 sowie eines Vergleichsbeispiels 1. Der Brechungsindex der Antireflexionsschicht 20 beträgt jeweils 1,3. Das Substrat 1 ist eine getönte, thermisch vorgespannte Kalk-Natron-Glasscheibe (Lichttransmission von 10 % bei einer theoretischen Dicke von 4 mm), die als Einscheibensicherheitsglas (ESG) die erfindungsgemäße Scheibe ausbildet.

Die beiden erfindungsgemäßen Beispiele 1 und 2 unterscheiden sich leicht in den Schichtdicken der Einzelschichten der emissivitätsmindernden Beschichtung 10. Durch Anpassung der Dicke der dielektrischen Schichten können insbesondere die optischen Eigenschaften der Scheibe beeinflusst werden, beispielsweise die Reflexionsfarbe. Das Vergleichsbeispiel 1 weist die gleiche emissivitätsmindernden Beschichtung 10 wie Beispiel 1 auf, hat aber keine Antireflexionsbeschichtung 20.

**Tabelle 3**

| **Schicht** | **Material** | **Dicke** | | |
|---|---|---|---|---|
| | | **Beispiel 1** | **Beispiel 2** | **Vergleichsbeispiel 1** |
| 20 | Nanoporöses SiO₂ | 100 nm | 100 nm | - |
| 10.5 | SiO₂ | 40 nm | 40 nm | 40 nm |
| 10.4 | Si₃N₄ | 9 nm | 9 nm | 9 nm |
| 10.3 | ITO | 72 nm | 72 nm | 72 nm |
| 10.2 | SiO₂ | 20 nm | 10 nm | 20 nm |
| 10.1 | Si₃N₄ | 30 nm | 25 nm | 30 nm |
| 1 | Glas, getönt | 3,85 mm | 3,85 mm | 3,85 mm |

Tabelle 4 zeigt Materialien und Schichtdicken eines Beispiels 3 des Typs nach Figur 3 sowie eines Vergleichsbeispiels 2. Der Brechungsindex der Antireflexionsschicht 20 beträgt jeweils 1,3. Das Substrat 1 war eine getönte Kalk-Natron-Glasscheibe (Lichttransmission von 10 % bei einer theoretischen Dicke von 4 mm). Das Vergleichsbeispiel 2 weist die gleiche emissivitätsmindernden Beschichtung 10 wie Beispiel 3 auf, hat aber keine Antireflexionsbeschichtung 20.

**Tabelle 4**

| **Schicht** | **Material** | **Dicke** | |
|---|---|---|---|
| | | **Beispiel 3** | **Vergleichsbeispiel 2** |
| 20 | Nanoporöses SiO₂ | 140 nm | - |
| 10.3 | SnO₂:F | 380 nm | 380 nm |
| 1 | Glas, getönt | 3,85 mm | 3,85 mm |

In Tabelle 5 sind die integralen Reflexionswerte der Beispielscheiben zusammengefasst. Die dargestellten Werte des Reflexionsgrads R_{L} wurden durch Simulationen mit der Software CODE ermittelt. Die Reflexionswerte charakterisieren die innenraumseitige Lichtreflexion unter Bestrahlung mit Lichtquelle A und einem Beobachtungswinkel von 8° (R_{L}(A) 8°) beziehungsweise 60° (R_{L}(A) 60°). Die integralen Reflexionswerte R_{L}(A) 8° und R_{L}(A) 60° ergeben sich durch Integration des Reflexionsspektrums im sichtbaren Spektralbereich von 380 nm bis 780 nm.

**Tabelle 5**

| | Beispiel 1 | Beispiel 2 | Vergleichsbeispiel 1 | Beispiel 3 | Vergleichsbeispiel 2 |
|---|---|---|---|---|---|
| R_{L}(A) 8° | 0,6 % | 1,5 % | 3,9 % | 1,8 % | 7,9 % |
| R_{L}(A) 60° | 2,2 % | 2,0 % | 9,5 % | 2,0 % | 12,6 % |

Es ist zu erkennen, dass die Lichtreflexion durch die erfindungsgemäße Antireflexionsbeschichtung 20 deutlich herabgesetzt wird. Insbesondere der Wert R_{L}(A) 60° ermöglicht eine Aussage darüber, inwieweit Spiegelungen an der Dachscheibe von den Fahrzeuginsassen auf der Rückbank als störend wahrgenommen werden. Es hat sich außerdem gezeigt, dass die Antireflexionsbeschichtung 20 gut auf der emissivitätsmindernden Beschichtung 10 haftet und ausreichend langzeitstabil ist für einen Einsatz in einem Kraftfahrzeug.

Tabelle 6 zeigt Materialien und Schichtdicken eines weiteren erfindungsgemäßen Beispiels 4. Die Ausgestaltung des Beispiels 4 ähnelt derjenigen der Beispiele 1 und 2. Die emissivitätsmindernde Beschichtung 10 weist im Unterschied dazu keine obere Entspiegelungsschicht 10.5 auf, sondern besteht nur aus der Blockerschicht 10.1 gegen Alkalidiffusion, der unteren Entspiegelungsschicht 10.2, der Schicht 10.3 auf Basis von ITO und der Barriereschicht 10.4 zur Regulierung der Sauerstoffdiffusion. Die einzelnen Schichten der Beschichtung 10 wurden auch hier durch magnetfeldunterstützte Kathodenstrahlzerstäubung abgeschieden. Die Antireflexionsschicht 20 ist wiederum eine einzelne Schicht aus nanoporösem Siliziumoxid (SiO₂), die im Sol-Gel-Verfahren auf der emissivitätsmindernden Beschichtung 10 abgeschieden wurde. Die Porengröße und -dichte wurde dabei mittels Porenformern derart eingestellt, dass der Brechungsindex der Antireflexionsbeschichtung etwa 1,3 beträgt.

In Tabelle 6 sind auch die Materialien und Schichtdicken eines weiteren Vergleichsbeispiels 3 dargestellt. Das Vergleichsbeispiel 3 weist keine erfindungsgemäße nanoporöse Antireflexionsbeschichtung 20 auf. Im Vergleich zu den Beispiele 1 und 2 und dem Vergleichsbeispiel 1 ist die Dicke der oberen Entspiegelungsschicht 10.5 deutlich vergrößert, so dass der Fachmann davon ausgehen könnte, dass die obere Entspiegelungsschicht 10.5 die Funktion der Antireflexionsbeschichtung 20 zumindest teilweise mit erfüllt. Alternativ kann das Vergleichsbeispiel 3 zum Vergleich mit Beispiel 4 herangezogen werden, wobei die emissivitätsmindernde Beschichtung 10 identisch ausgebildet ist und die erfindungsgemäße Antireflexionsbeschichtung 20 des Beispiels 4 durch eine alternative Antireflexionsbeschichtung ersetzt ist, welche durch magnetfeldunterstützte Kathodenstrahlzerstäubung abgeschieden wurde.

**Tabelle 6**

| **Schicht** | **Material** | **Dicke** | |
|---|---|---|---|
| | | **Beispiel 4** | **Vergleichsbeispiel 3** |
| 20 | Nanoporöses SiO₂ | 100 nm | |
| 10.5 | SiO₂ | - | 140 nm |
| 10.4 | Si₃N₄ | 9 nm | 9 nm |
| 10.3 | ITO | 72 nm | 72 nm |
| 10.2 | SiO₂ | 20 nm | 20 nm |
| 10.1 | Si₃N₄ | 30 nm | 30 nm |
| 1 | Glas, getönt | 3,85 mm | 3,85 mm |

In Tabelle 7 sind die integralen Reflexionswerte des Beispiels 4 und des Vergleichsbeispiels 3 zusammengefasst (analog zu Tabelle 5).

**Tabelle 7**

| | Beispiel 4 | Vergleichsbeispiel 3 |
|---|---|---|
| R_{L}(A) 8° | 0,1 % | 4,2 % |
| R_{L}(A) 60° | 3,5 % | 7,3 % |

Es ist zu erkennen, dass mit Beispiel 4 Reflexionswerte erreicht werden, welche in einem ähnlichen Bereich liegen wie diejenigen der Beispiele 1-3. Es ist also möglich, auf die obere Entspiegelungsschicht 10.5 der emissivitätsmindernden Beschichtung 10 zu verzichten - ihre Funktion wird gleichsam durch die Antireflexionsbeschichtung 20 übernommen.

Ebenso ist zu erkennen, dass mit Vergleichsbeispiel 3 deutlich höhere Reflexionswerte erreicht werden als bei den Beispielen. Dies gilt insbesondere für den Beobachtungswinkel von 60°. Die Winkelabhängigkeit des Reflexionsverhaltens ist also größer ohne die nanoporöse Antireflexionsbeschichtung 20. Außerdem ist die Abscheidung einer dermaßen Dicken SiO₂-Schicht durch Kathodenstrahlzerstäubung aufwändig und zeitintensiv.

### Bezugszeichenliste:

- (1): Substrat
- (2): Außenscheibe
- (3): thermoplastische Zwischenschicht

- (10): emissivitätsmindernde Beschichtung
- (10.1): Blockerschicht gegen Alkalidiffusion
- (10.2): untere Entspiegelungsschicht
- (10.3): Schicht auf Basis eines transparenten leitfähigen Oxids (TCO)
- (10.4): Barriereschicht zur Regulierung von Sauerstoffdiffusion
- (10.5): obere Entspiegelungsschicht

- (20): Antireflexionsbeschichtung

- (30): Sonnenschutzbeschichtung

- (I): außenseitige Oberfläche der Außenscheibe 2
- (II): innenraumseitige Oberfläche der Außenscheibe 2
- (III): außenseitige Oberfläche des Substrats 1
- (IV): innenraumseitige Oberfläche des Substrats 1

## Patentansprüche

1. Fahrzeugscheibe mit verminderter Emissivität und Lichtreflexion, mindestens umfassend:
- ein Substrat (1) mit einer exponierten innenraumseitigen Oberfläche (IV),
- auf der innenraumseitigen Oberfläche (IV) eine emissivitätsmindernde Beschichtung (10), enthaltend mindestens eine Schicht (10.3) auf Basis eines transparenten leitfähigen Oxids (TCO),
- auf der emissivitätsmindernden Beschichtung (10) eine Antireflexionsbeschichtung (20) auf Basis von nanoporösem Siliziumoxid.

2. Fahrzeugscheibe nach Anspruch 1, wobei die Antireflexionsbeschichtung (20) eine Sol-Gel-Beschichtung ist, in der geschlossene und/oder offene Nanoporen ausgebildet sind.

3. Fahrzeugscheibe nach Anspruch 1 oder 2, wobei die Antireflexionsbeschichtung (20) Poren mit einer Größe von 1 nm bis 500 nm aufweist, bevorzugt von 1 nm bis 100 nm, besonders bevorzugt von 20 nm bis 80 nm.

4. Fahrzeugscheibe nach einem der Ansprüche 1 bis 3, wobei die Antireflexionsbeschichtung (20) einen Brechungsindex von 1,2 bis 1,4 aufweist, bevorzugt von 1,25 bis 1,35, und eine Dicke von 50 nm bis 150 nm.

5. Fahrzeugscheibe nach einem der Ansprüche 1 bis 4, wobei die Schicht (10.3) auf Basis eines transparenten leitfähigen Oxids (TCO) auf Basis von Fluor-dotiertem Zinnoxid (FTO) oder Antimon-dotiertem Zinnoxid (ATO) ausgebildet ist und eine Dicke von 100 nm bis 600 nm aufweist, und wobei die emissivitätsmindernde Beschichtung (10) bevorzugt nur aus der Schicht (10.3) auf Basis eines transparenten leitfähigen Oxids (TCO) besteht.

6. Fahrzeugscheibe nach einem der Ansprüche 1 bis 4, wobei die emissivitätsmindernde Beschichtung (10) ausgehend vom Substrat (1) die folgenden Schichten, insbesondere Dünnschichten, umfasst:
- eine Blockerschicht (10.1) gegen Alkalidiffusion mit einem Brechungsindex von mindestens 1,9,
- eine untere Entspiegelungsschicht (10.2) mit einem Brechungsindex von höchstens 1,8,
- die Schicht (10.3) auf Basis eines transparenten leitfähigen Oxids, welches Indium-Zinn-Oxid (ITO) ist,
- ein Barriereschicht (10.4) zur Regulierung von Sauerstoffdiffusion mit einem Brechungsindex von mindestens 1,9.

7. Fahrzeugscheibe nach einem der Ansprüche 1 bis 4, wobei die emissivitätsmindernde Beschichtung (10) ausgehend vom Substrat (1) die folgenden Schichten, insbesondere Dünnschichten, umfasst:
- eine Blockerschicht (10.1) gegen Alkalidiffusion mit einem Brechungsindex von mindestens 1,9,
- eine untere Entspiegelungsschicht (10.2) mit einem Brechungsindex von höchstens 1,8,
- die Schicht (10.3) auf Basis eines transparenten leitfähigen Oxids, welches Indium-Zinn-Oxid (ITO) ist,
- ein Barriereschicht (10.4) zur Regulierung von Sauerstoffdiffusion mit einem Brechungsindex von mindestens 1,9,
- eine obere Entspiegelungsschicht (10.5) mit einem Brechungsindex von höchstens 1,8.

8. Fahrzeugscheibe nach Anspruch 6 oder 7, wobei
- die Blockerschicht (10.1) ein Metall, ein Nitrid oder ein Carbid enthält, bevorzugt Siliziumnitrid oder Siliziumcarbid, insbesondere Siliziumnitrid,
- die untere Entspiegelungsschicht (10.2) ein Oxid enthält, bevorzugt Siliziumoxid,
- die Barriereschicht (10.4) ein Metall, ein Nitrid oder ein Carbid enthält, bevorzugt Siliziumnitrid oder Siliziumcarbid, insbesondere Siliziumnitrid,
- die obere Entspiegelungsschicht (10.5), sofern vorhanden, ein Oxid enthält, bevorzugt Siliziumoxid.

9. Fahrzeugscheibe nach Anspruch 6 oder 7, wobei
- die Blockerschicht (10.1) eine Dicke von 10 nm bis 50 nm aufweist, bevorzugt von 20 nm bis 40 nm,
- die untere Entspiegelungsschicht (10.2) eine Dicke von 5 nm bis 100 nm, bevorzugt von 10 nm bis 50 nm aufweist,
- die Schicht (10.3) auf Basis eines transparenten leitfähigen Oxids eine Dicke von 50 nm bis 150 nm aufweist, bevorzugt von 60 nm bis 100 nm,
- die Barriereschicht (10.4) eine Dicke von 5 nm bis 20 nm aufweist, bevorzugt von 7 nm bis 12 nm,
- die obere Entspiegelungsschicht (10.5), sofern vorhanden, eine Dicke von 10 nm bis 100 nm, bevorzugt von 30 nm bis 70 nm aufweist.

10. Verfahren zur Herstellung einer Fahrzeugscheibe mit verminderter Emissivität und Lichtreflexion, wobei
(a) auf eine exponierte innenraumseitige Oberfläche (IV) eines Substrats (1) eine emissivitätsmindernde Beschichtung (10) aufgebracht wird, welche mindestens eine Schicht (10.3) auf Basis eines transparenten leitfähigen Oxids (TCO) umfasst; und
(b) auf der emissivitätsmindernde Beschichtung (10) eine Antireflexionsbeschichtung (20) auf Basis von nanoporösem Siliziumoxid abgeschieden wird.

11. Verfahren nach Anspruch 10, wobei die Antireflexionsbeschichtung (20) in einem Sol-Gel-Verfahren aufgebracht wird, indem
- ein Präkursoren-Sol bereitgestellt wird, das Siliziumoxid-Präkursoren in einem Lösungsmittel enthält, insbesondere Silane oder Silikate,
- das Präkursoren-Sol mit einem Porenformer vermischt wird, der bevorzugt in einer wässrigen Phase dispergiert ist,
- die erhaltene Lösung auf die innenraumseitige Oberfläche (IV) eines Substrats (1) aufgebracht wird, und
- das Präkursoren-Sol kondensiert wird.

12. Verfahren nach Anspruch 11, wobei der Porenformer nach der Kondensation des Präkursoren-Sols entfernt wird.

13. Verfahren nach Anspruch 12, wobei der Porenformer als polymere Nanopartikel ausgebildet ist, insbesondere PMMA-Nanopartikel, und wobei das Entfernen des Porenformers durch eine Hitzebehandlung bei einer Temperatur von mindestens 400 °C erreicht wird.

14. Verfahren nach Anspruch 12, wobei der Porenformer als polymere Nanopartikel ausgebildet ist, insbesondere PMMA-Nanopartikel, und wobei das Entfernen des Porenformers durch Auslösen mit einem Lösungsmittel erreicht wird, insbesondere mit THF.

15. Verwendung einer Fahrzeugscheibe nach einem der Ansprüche 1 bis 9 in Fortbewegungsmitteln für den Verkehr auf dem Lande, in der Luft oder zu Wasser, insbesondere als Fensterscheibe, beispielsweise als Dachscheibe, Seitenscheibe, Heckscheibe oder Windschutzscheibe eines Fahrzeugs.

## Claims

1. Vehicle pane with reduced emissivity and light reflection, at least comprising:
- a substrate (1) having an exposed interior-side surface (IV),
- an emissivity-reducing coating (10) containing at least one layer (10.3) based on a transparent conductive oxide (TCO) on the interior-side surface (IV),
- an anti-reflection coating (20) based on nanoporous silicon oxide on the emissivity-reducing coating (10).

2. Vehicle pane according to claim 1, wherein the anti-reflection coating (20) is a sol-gel coating, in which closed and/or open nanopores are formed.

3. Vehicle pane according to claim 1 or 2, wherein the anti-reflection coating (20) has pores with a size from 1 nm to 500 nm, preferably from 1 nm to 100 nm, particularly preferably from 20 nm to 80 nm.

4. Vehicle pane according to one of claims 1 through 3, wherein the anti-reflection coating (20) has a refractive index from 1.2 to 1.4, preferably from 1.25 to 1.35, and a thickness from 50 nm to 150 nm.

5. Vehicle pane according to one of claims 1 through 4, wherein the layer (10.3) based on a transparent conductive oxide (TCO) is based on fluorine-doped tin oxide (FTO) or antimony-doped tin oxide (ATO) and has a thickness from 100 nm to 600 nm, and wherein the emissivity-reducing coating (10) preferably consists only of the layer (10.3) based on a transparent conductive oxide (TCO).

6. Vehicle pane according to one of claims 1 through 4, wherein the emissivity-reducing coating (10) comprises the following layers, in particular thin layers, starting from the substrate (1):
- a blocking layer (10.1) against alkali diffusion with a refractive index of at least 1.9,
- a lower anti-reflection layer (10.2) with a refractive index of at most 1.8,
- the layer (10.3) based on a transparent conductive oxide, which is indium tin oxide (ITO),
- a barrier layer (10.4) to regulate oxygen diffusion with a refractive index of at least 1.9.

7. Vehicle pane according to one of claims 1 through 4, wherein the emissivity-reducing coating (10) comprises the following layers, in particular thin layers, starting from the substrate (1):
- a blocking layer (10.1) against alkali diffusion with a refractive index of at least 1.9,
- a lower anti-reflection layer (10.2) with a refractive index of at most 1.8,
- the layer (10.3) based on a transparent conductive oxide, which is indium tin oxide (ITO),
- a barrier layer (10.4) to regulate oxygen diffusion with a refractive index of at least 1.9,
- an upper anti-reflection layer (10.5) with a refractive index of at most 1.8.

8. Vehicle pane according to claim 6 or 7, wherein
- the blocking layer (10.1) contains a metal, a nitride, or a carbide, preferably silicon nitride or silicon carbide, in particular silicon nitride,
- the lower anti-reflection layer (10.2) contains an oxide, preferably silicon oxide,
- the barrier layer (10.4) contains a metal, a nitride, or a carbide, preferably silicon nitride or silicon carbide, in particular silicon nitride,
- the upper anti-reflection layer (10.5), if present, contains an oxide, preferably silicon oxide.

9. Vehicle pane according to claim 6 or 7, wherein
- the blocking layer (10.1) has a thickness from 10 nm to 50 nm, preferably from 20 nm to 40 nm,
- the lower anti-reflection layer (10.2) has a thickness from 5 nm to 100 nm, preferably from 10 nm to 50 nm,
- the layer (10.3) based on a transparent conductive oxide has a thickness from 50 nm to 150 nm, preferably from 60 nm to 100 nm,
- the barrier layer (10.4) has a thickness from 5 nm to 20 nm, preferably from 7 nm to 12 nm,
- the upper anti-reflection layer (10.5), if present, has a thickness from 10 nm to 100 nm, preferably from 30 nm to 70 nm.

10. Method for producing a vehicle pane with reduced emissivity and light reflection, wherein
(a) an emissivity-reducing coating (10), which comprises at least one layer (10.3) based on a transparent conductive oxide (TCO), is applied to an exposed interior-side surface (IV) of a substrate (1); and
(b) an anti-reflection coating (20) based on nano-porous silicon oxide is deposited on the emissivity-reducing coating (10).

11. Method according to claim 10, wherein the anti-reflection coating (20) is applied in in a sol-gel process, by
- providing a precursor sol that contains silicon oxide precursors in a solvent, in particular silanes or silicates,
- mixing the precursor sol with a pore former, which is preferably dispersed in an aqueous phase,
- applying the solution obtained to the interior-side surface (IV) of a substrate (1), and
- condensing the precursor sol.

12. Method according to claim 11, wherein the pore former is removed after condensation of the precursor sol.

13. Method according to claim 12, wherein the pore former is implemented as polymeric nanoparticles, in particular PMMA nanoparticles, and wherein the removal of the pore former is achieved by a heat treatment at a temperature of at least 400 °C.

14. Method according to claim 12, wherein the pore former is implemented as polymeric nanoparticles, in particular PMMA nanoparticles, and wherein the removal of the pore former is achieved by dissolving with a solvent, in particular with THF.

15. Use of a vehicle pane according to one of claims 1 through 9 in means of transportation for traffic on land, in the air, or on water, in particular as a window pane, for example, as a roof panel, side pane, rear pane, or windshield of a vehicle.

## Revendications

1. Vitre de véhicule à émissivité et réflexion lumineuse réduites, comprenant au moins :
- un substrat (1) ayant une surface intérieure exposée (IV),
- un revêtement (10) qui réduit l'émissivité et contient au moins une couche (10.3) à base d'un oxyde conducteur transparent (TCO) sur la surface intérieure (IV),
- un revêtement antireflet (20) à base d'oxyde de silicium nanoporeux sur le revêtement réducteur d'émissivité (10).

2. Vitre de véhicule selon la revendication 1, dans laquelle le revêtement antireflet (20) est un revêtement sol-gel, dans lequel des nanopores fermés et/ou ouverts sont formés.

3. Vitre de véhicule selon la revendication 1 ou 2, dans laquelle le revêtement antireflet (20) présente des pores d'une taille comprise entre 1 nm et 500 nm, de préférence entre 1 nm et 100 nm, de préférence encore entre 20 nm et 80 nm.

4. Vitre de véhicule selon l'une des revendications 1 à 3, dans laquelle le revêtement antireflet (20) a un indice de réfraction de 1,2 à 1,4, de préférence de 1,25 à 1,35, et une épaisseur de 50 nm à 150 nm.

5. Vitre de véhicule selon l'une des revendications 1 à 4, dans laquelle la couche (10.3) à base d'oxyde conducteur transparent (TCO) est à base d'oxyde d'étain dopé au fluor (FTO) ou d'oxyde d'étain dopé à l'antimoine (ATO) et a une épaisseur de 100 nm à 600 nm, et dans laquelle le revêtement réducteur d'émissivité (10) est de préférence constitué uniquement de la couche (10.3) à base d'oxyde conducteur transparent (TCO).

6. Vitre de véhicule selon l'une des revendications 1 à 4, dans laquelle le revêtement réducteur d'émissivité (10) comprend les couches suivantes, en particulier des couches minces, à partir du substrat (1) :
- une couche de blocage (10.1) contre la diffusion des alcalis avec un indice de réfraction d'au moins 1,9,
- une couche antireflet inférieure (10.2) avec un indice de réfraction d'au moins 1,8,
- la couche (10.3) à base d'un oxyde conducteur transparent, qui est l'oxyde d'indium et d'étain (ITO),
- une couche barrière (10.4) destinée à réguler la diffusion de l'oxygène et ayant un indice de réfraction d'au moins 1,9.

7. Vitre de véhicule selon l'une des revendications 1 à 4, dans laquelle le revêtement réducteur d'émissivité (10) comprend les couches suivantes, en particulier des couches minces, à partir du substrat (1) :
- une couche de blocage (10.1) contre la diffusion des alcalis avec un indice de réfraction d'au moins 1,9,
- une couche antireflet inférieure (10.2) avec un indice de réfraction d'au moins 1,8,
- la couche (10.3) à base d'un oxyde conducteur transparent, qui est l'oxyde d'indium et d'étain (ITO),
- une couche barrière (10.4) destinée à réguler la diffusion de l'oxygène et ayant un indice de réfraction d'au moins 1,9,
- une couche antireflet supérieure (10.5) ayant un indice de réfraction d'au moins 1,8.

8. Vitre de véhicule selon la revendication 6 ou 7, dans laquelle
- la couche de blocage (10.1) contient un métal, un nitrure ou un carbure, de préférence un nitrure ou un carbure de silicium, en particulier un nitrure de silicium,
- la couche antireflet inférieure (10.2) contient un oxyde, de préférence de l'oxyde de silicium,
- la couche barrière (10.4) contient un métal, un nitrure ou un carbure, de préférence du nitrure de silicium ou du carbure de silicium, en particulier du nitrure de silicium,
- la couche antireflet supérieure (10.5), si elle existe, contient un oxyde, de préférence un oxyde de silicium.

9. Vitre de véhicule selon la revendication 6 ou 7, dans laquelle
- la couche de blocage (10.1) a une épaisseur de 10 nm à 50 nm, de préférence de 20 nm à 40 nm,
- la couche antireflet inférieure (10.2) a une épaisseur de 5 nm à 100 nm, de préférence de 10 nm à 50 nm,
- la couche (10.3) à base d'oxyde conducteur transparent a une épaisseur de 50 nm à 150 nm, de préférence de 60 nm à 100 nm,
- la couche barrière (10.4) a une épaisseur de 5 nm à 20 nm, de préférence de 7 nm à 12 nm,
- la couche antireflet supérieure (10.5), si elle est présente, a une épaisseur de 10 nm à 100 nm, de préférence de 30 nm à 70 nm.

10. Procédé de fabrication d'une vitre de véhicule à émissivité et réflexion lumineuse réduites, dans lequel
(a) un revêtement réducteur d'émissivité (10), qui comprend au moins une couche (10.3) à base d'oxyde conducteur transparent (TCO), est appliqué sur une surface intérieure exposée (IV) d'un substrat (1); et
(b) un revêtement antireflet (20) à base d'oxyde de silicium nanoporeux est déposé sur le revêtement réducteur d'émissivité (10).

11. Procédé selon la revendication 10, dans lequel le revêtement antireflet (20) est appliqué dans un processus sol-gel, en
- en fournissant un sol précurseur qui contient des précurseurs d'oxyde de silicium dans un solvant, en particulier des silanes ou des silicates,
- en mélangeant le sol précurseur avec un formateur de pores, qui est de préférence dispersé dans une phase aqueuse,
- appliquer la solution obtenue sur la surface intérieure (IV) d'un substrat (1), et
- condenser le sol précurseur.

12. Procédé selon la revendication 11, dans lequel le formateur de pores est éliminé après la condensation du sol précurseur.

13. Méthode selon la revendication 12, dans laquelle le formateur de pores est mis en oeuvre sous forme de nanoparticules polymères, en particulier des nanoparticules de PMMA, et dans laquelle l'élimination du formateur de pores est réalisée par un traitement thermique à une température d'au moins 400 °C.

14. Méthode selon la revendication 12, dans laquelle le formateur de pores est mis en oeuvre sous forme de nanoparticules polymères, en particulier de nanoparticules de PMMA, et dans laquelle l'élimination du formateur de pores est réalisée par dissolution avec un solvant, en particulier avec du THF.

15. Utilisation d'une vitre de véhicule selon l'une des revendications 1 à 9 dans des moyens de transport pour la circulation sur terre, dans l'air ou sur l'eau, en particulier comme vitre, par exemple comme panneau de toit, panneau latéral, panneau arrière ou pare-brise d'un véhicule.
